# EUROPÄISCHE PATENTSCHRIFT

(11) **EP 2 199 137 B1**
(45) Veröffentlichungstag und Bekanntmachung des Hinweises auf die Patenterteilung: **20.06.2012**
(21) Anmeldenummer: 08172122.7
(22) Anmeldetag: 18.12.2008
(51) Int. Cl.: B60K 7/00

(54) **Radnebenmotor-Anordnung**
Lateral wheel motor assembly
Agencement de moteur latéral à la roue

(43) Veröffentlichungstag der Anmeldung: 23.06.2010
(73) Patentinhaber: Klingelnberg AG, 8050 Zürich (CH)
(72) Erfinder: Mies, Georg, 51688, Wipperfürth (DE)
(74) Vertreter: OK pat AG

(56) Entgegenhaltungen:
- EP-A- 0 786 365
- EP-A- 1 101 645
- WO-A-00/32462
- DE-A1- 19 617 165
- DE-U1- 29 601 177
- FR-A- 2 726 231
- GB-A- 151 035
- US-A- 1 481 405
- US-A- 1 543 044

## Beschreibung

### Gebiet der Erfindung

Gegenstand der Erfindung ist eine Vorrichtung, hier als Radnebenmotor-Anordnung bezeichnet, für ein Fahrzeug, die insbesondere in Elektrofahrzeugen und/oder Hybridfahrzeugen einsetzbar ist. Die Erfindung betrifft außerdem ein Fahrzeug mit mindestens einer solchen Vorrichtung.

Die US 1543044 offenbart ein fahrzeug und eine Vorrichtung gemäß dem Oberbegriff des Anspruchs 1 resp. Anspruchs 9.

### Hintergrund der Erfindung, Stand der Technik

Im Zusammenhang mit dem Klimawandel ergibt sich ein dringender Bedarf für alternative Antriebe und Antriebskonzepte. Insbesondere Elektro-und/oder Hybridantriebe haben daher eine sehr große Bedeutung gewonnen. Verschiedene Lösungen sind bereits in diesem Fachgebiet bekannt, die entweder als Hauptantrieb oder Hilfsantrieb einen oder mehrere Elektromotoren einsetzen. Weil die Kapazität der Batterien, die den Strom für die Elektromotoren liefern, sehr beschränk ist, wird versucht die Effizienz solcher Elektroantriebe zu verbessern. Dies ist z.B. möglich durch eine Reduzierung der Reibung des Antriebs. Um eine solche Reduzierung der Reibung zu erreichen, kann zum Beispiel die Anzahl der Komponenten, die die Kraft von der Quelle zum Zielort liefern, minimiert werden. Ein Extremfall ist, wenn der Elektromotor direkt das Rad antreibt. In diesem Fall gibt es wenig Verluste zwischen dem Elektromotor und dem getriebenen Rad. Diese Lösung nennt man Radnabenmotor. Obwohl diese Lösung auf den ersten Blick sehr einfach und vorteilhaft aussieht, gibt es mehrere Nachteile und Schwierigkeiten. Das große Problem ist, dass die Räder eines Fahrzeugs typischerweise nicht fest sondern durch eine Radaufhängung mit dem Fahrzeug verbunden sind, wodurch das Fahrzeug gefedert ist. Die Räder sind dann ein Teil der nicht gefederten Masse. Das bedeutet, dass sich die Räder samt den Radnabenmotoren bei fahrendem Fahrzeug in verschiedene Richtungen in Bezug auf das Fahrzeug bewegen. Um die notwendige Bewegungsfreiheit zu ermöglichen, werden verschiedene Gelenke und Aufhängungen eingesetzt. Ein klassischer Antrieb benutzt z.B. eine Reihe von Gleichlaufgelenken, um ein im Fahrzeug sitzendes Triebwerk mit den sich bewegenden Rädern verbinden zu können. Im Falle von Radnabenmotoren, wo der Elektromotor ohne zusätzliche Gelenke direkt auf oder an der Radachse liegt, wird der gesamte Elektromotor Teil der ungefederten Masse des Rades. Dieser Aspekt hat verschiedene nachteilige Folgen, wie z. B., dass der Elektromotor allen Vibrationen und Kräften direkt ausgesetzt ist. Außerdem ist allgemein bekannt, dass der Wagen umso ruhiger läuft, umso niedriger die ungefederte Masse ist. Deshalb wird im Allgemeinen eine Senkung der ungefederten Masse angestrebt, was z. B. durch das Einsetzen von Leichtmetallfelgen erreicht werden kann. Wenn man einen Radnabenmotor einsetzt, steigt aber die ungefederte Masse deutlich an. Dies hat große negative Einflüsse auf den Fahrkomfort im Allgemeinen.

Ein weiterer Nachteil des Radnabenmotors ist, dass die direkt in der Nähe des Rades befindlichen Komponenten dem Schmutzwasser und allen möglichen anderen Umwelteinflüssen ausgesetzt sind. Weiterhin, da sich auch die Bremse in unmittelbarer Nähe der Antriebselemente befindet, gibt es thermische Probleme durch die gegenseitige Erwärmung von Motor und Bremse. Außerdem ist aufgrund des kleinen zur Verfügung stehenden Bauraumes im Inneren der Felge die Kühlung dieser Komponenten problematisch.

Einer der größten Nachteile des Radnabenmotors, der bis jetzt nicht voll gelöst werden konnte, ist, dass man hochpolige, teuere Motoren mit großen Durchmessern einsetzen muss, wenn man auf Untersetzungsgetriebestufen verzichten möchte.

Es gibt folgende Nachteile von Radnabenmotoren und anderen Direktantrieben:
- hohe ungefederte Masse, da sich der relativ schwere Elektromotor mit dem Rad auf und ab bewegt;
- die direkt in der Nähe des Rades befindlichen Komponenten sind dem Schmutzwasser und allen möglichen anderen Umwelteinflüssen ausgesetzt;
- da sich auch die Bremse in unmittelbarer Nähe der Antriebselemente befindet, gibt es außerdem thermische Probleme durch die Erwärmung von Motor und Bremse;
- wenn man auf Untersetzungsgetriebestufen verzichten möchte, muss man hochpolige, teuere Motoren mit großen Durchmessern einsetzten, was wiederum zu Platzproblemen im Inneren der Felge führt;
- es entstehen am Rad größere Kreiselkräfte, die beim Richtungswechsel störend wirken können.

Aufgabe der vorliegenden Erfindung ist daher, einen Elektroantrieb für Elektrofahrzeuge und/oder Hybridfahrzeuge bereitzustellen, die relativ einfach ist, um ohne deutliche Änderungen an bestehenden Radaufhängungssystemen, verwendet werden zu können. Ausserdem soll diese Lösung möglicht wenig Platz oder Bauraum in Anspruch nehmen.

Eine weitere Aufgabe der vorliegenden Erfindung ist es eine Lösung mit höherer Effizienz bereitzustellen, der eine Reduzierung der Reibung des Antriebs bietet.

Eine noch weitere Aufgabe der vorliegenden Erfindung ist, eine Lösung bereitzustellen, wo der Elektromotor und weitere Komponenten des Antriebs nicht dem Schmutzwasser und allen möglichen anderen Umwelteinflüssen ausgesetzt sind.

Eine noch weitere Aufgabe der vorliegenden Erfindung ist, eine Lösung bereitzustellen, wo gleichzeitig mit der Senkung der Reibung des Antriebs, die bisher bestehenden thermischen Probleme vermieden werden können.

### Zusammenfassung der Erfindung

Nach einem ersten Aspekt der Erfindung wird die Aufgabe gelöst durch ein Fahrzeug, umfassend: eine Radaufhängung, ein anzutreibendes Rad, das mittels der Radaufhängung mit dem Fahrzeug verbunden ist, und einen Elektromotor. Das Fahrzeug umfasst weiterhin: ein Kegelradgetriebe, das mit dem Rad direkt verbunden ist und das eine feste Getriebeuntersetzung aufweist, eine Welle, die zwischen dem Elektromotor und dem Kegelradgetriebe so angeordnet ist, dass der Elektromotor mittels der Welle und dem Kegelradgetriebe antriebstechnisch mit dem Rad verbunden ist.

Erfindungsgemäß ist die Befestigung des Elektromotors am Fahrzeug so ausgelegt ist, dass der Elektromotor bewegungstechnisch im Wesentlichen von Radbewegungen des Rades entkoppelt ist und die Welle, die den Elektromotor mit dem Rad antriebstechnisch verbindet, von einem neutralen Drehpunkt des fahrzeugseitigen Endes der Radaufhängung zu einem Drehpunkt des radseitigen Endes der Radaufhängung verläuft.

Nach einem zweiten Aspekt der Erfindung wird die Aufgabe gelöst durch eine Vorrichtung Vorrichtung zur Verwendung in einem Fahrzeug, das ein anzutreibendes Rad aufweist, das mittels einer Radaufhängung mit dem Fahrzeug verbunden ist.

Erfindungsgemäß umfasst die Vorrichtung: einen Elektromotor zur bewegungstechnisch im Wesentlichen entkoppelten Lagerung am Fahrzeug, ein mit dem Rad direkt verbundenes Kegelradgetriebe, mit einer festen Getriebeuntersetzung, eine Welle zum antriebstechnischen Verbinden des Elektromotors mit dem Kegelradgetriebe. Dabei sind der Elektromotor, das Kegelradgetriebe und die Welle so ausgelegt, dass im montierten Zustand der Elektromotor Bestandteil der gefederten Masse des Fahrzeugs ist, der Elektromotor mittels der Welle mit dem Kegelradgetriebe so verbunden ist, dass der Elektromotor entweder außerhalb des Umfangs des Rades oder seitlich neben einem Reifen des Rades außerhalb der Radmitte liegt und die Welle, die den Elektromotor mit dem Rad antriebstechnisch verbindet, von einem neutralen Drehpunkt des fahrzeugseitigen Endes der Radaufhängung zu einem Drehpunkt des radseitigen Endes der Radaufhängung verläuft.

Der liegt Elektromotor nicht, direkt im Bereich der Radnabe, sondern befindet seitlich neben oder über dem Rad, außerhalb des inneren Umfangsbereichs des Rades und Bestandteil der gefederten Masse des Fahrzeugs ist. Das heißt der Elektromotor bewegt sich nicht solidarisch mit dem Rad sondern mit dem Fahrzeug. Das Rad wird von dem Elektromotor mittels eines Kegelradgetriebes mit einer festen Getriebeuntersetzung angetrieben. Auf diese Weise wird die Drehzahl des Elektromotors reduziert und es wird somit die Verwendung von kompakten Elektromotoren mit höheren Drehzahlen ermöglicht. Ferner kann der Elektromotor je nach konkreter Anordnung entweder eine längslaufende oder eine Winkelbewegung in Bezug auf das Rad ausführen, ohne dass die (Antriebs-)Verbindung zwischen dem Elektromotor und dem Rad unterbrochen würde. Die Vorrichtung nach der Erfindung ist so ausgelegt, dass der Elektromotor Teil der gefederten Masse des Fahrzeugs ist und trotzdem wenig Platz oder Bauraum im Fahrzeug beansprucht.

Um die Verbindung zwischen dem Kegelradgetriebe und dem Elektromotor trotz der längslaufenden Bewegungen aufrecht zu erhalten, wird z.B. eine Kugelkeilwelle eingesetzt, die, selbst wenn sie kontinuierlich angetrieben ist, größere axiale Verschiebungen ausgleichen und währenddessen Drehbewegungen übertragen kann. Diese Ausführungsform ist besonders für Vorderachsen vorteilhaft.

Um die (Antriebs-)Verbindung zwischen dem Kegelradgetriebe und dem Elektromotor trotz etwaiger Winkelbewegungen aufrecht zu erhalten, verläuft entsprechend der vorliegenden Erfindung die Welle, die den Elektromotor mit dem Rad antriebstechnisch verbindet, vom neutralen Drehpunkt des fahrzeugseitigen Endes der Radaufhängung, zum Drehpunkt des Radendes der Radaufhängung. In diesem Fall ist eine Kugelkeilwelle nicht notwendig. Hierdurch werden kleine Winkelbewegungen der Elektromotoren in Bezug auf das Rad erlaubt, was besonders vorteilhaft bei Hinterachsenmodulen nutzbar ist.

Vorzugsweise wird, wie bei bekannten Radnabenmotoren, ein Elektromotor per angetriebenem Rad eingesetzt. Dies hat den Vorteil, dass z.B. eine individuelle Ansteuerung der Räder für die Fahrdynamikregelung (ESP, ASR), sowie unterschiedliche Drehmomente zur Unterstützung des Lenkverhaltens bei Kurvenfahrt ermöglicht werden. Außerdem entfällt das bei zentraler Ansteuerung mehrerer Räder erforderliche Ausgleichsgetriebe.

Der wichtigste Vorteil der erfinderischen Anordnung gemäß der vorliegenden Erfindung ist daher, dass die Elektromotoren Teil der gefederten Masse sind, d. h., die ungefederte Masse des Rades wird im Vergleich zu konventionell angetriebenen Fahrzeugen nicht deutlich erhöht. Das bedeutet, dass die erfindungsgemäße Vorrichtung also keine spürbaren negativen Auswirkungen auf das Fahr- oder Lenkverhalten des Fahrzeuges hat.

Ein weiterer Vorteil der Erfindung ist, dass das gleiche Kegelradgetriebe gleichzeitig zur Reduzierung der Drehzahl, zur Erhöhung des Drehmomentes und zur Änderung der Achsrichtung mit folgenden Auswirkungen dient:
- Durch die Reduzierung der Drehzahl ist die Verwendung von kompakten Elektromotoren, mit einer für eine hohe Leistungsdichte günstigen Drehzahl, möglich.
- Durch die Erhöhung des Drehmomentes lassen sich mit diesen kompakten Elektromotoren die am Rad erforderlichen Drehmomente erreichen.
- Durch die Änderung der Achsrichtung lässt sich der Elektromotor besonders platzsparend so verlagern, dass dessen Masse nicht in die ungefederte Masse am Rad eingeht.
- Durch eine spezielle Anordnung in Bezug auf die Fahrzeugkarosserie oder das Fahrwerk kann der Elektromotor bewegungstechnisch im Wesentlichen von den Bewegungen des Rades entkoppelten werden.

Ein noch weiterer Vorteil der Erfindung ist, dass die Radnebenmotor-Anordnung sich ohne deutliche Änderungen an bestehenden Radaufhängungssystemen einsetzen lässt.

Weil der Elektromotor und weitere Komponenten des Antriebs sich nicht mehr innerhalb des Rades, bzw. im inneren Umfangsbereich des Rades, befinden, sind diese dem Schmutzwasser und allen möglichen anderen Umwelteinflüssen nicht mehr ausgesetzt. Weiterhin werden die thermischen Probleme, die bei Radnabenmotoren wegen der unmittelbarer Nähe des Elektromotors und der Bremse auftreten, vermieden.

Folgende Vorteile sprechen für einen erfindungsgemäßen Elektroantrieb in der unmittelbaren Nähe das anzutreibenden Rades:
- Verringerung der Elemente im Antriebsstrang, z.B. kann man auf die Antriebswellen mit den erforderlichen Gelenken verzichten;
- geringer Platzbedarf für den Antriebsstrang (die konventionellen Antriebswellen benötigen verhältnismäßig viel Platz, da sie beweglich sind). Bei elektrisch angetriebenen Fahrzeugen ist dies besonders interessant, da für die Akkus ein hoher Platzbedarf besteht;
- kein Ausgleichsgetriebe (Differential) erforderlich;
- individuelle Ansteuerung der Räder für die Fahrdynamikregelung (ESP, ASR) sowie unterschiedliche Drehmomente bei Kurvenfahrt;
- Vierradantrieb ist einfach realisierbar;
- Kombination aus herkömmlichem Antrieb z.B. an der Vorderachse plus elektrischem Antrieb an der Hinterachse ist sehr einfach realisierbar;
- Baukastensystem für Fahrzeuge mit herkömmlichem Antrieb, kombiniertem Antrieb (s.o.) und rein elektrischem Antrieb auf Basis der gleichen Plattform mit austauschbaren Komponenten.

Weitere Vorteile der Erfindung sind:
- an der Vorderachse lässt sich die Erfindung ideal z.B. in eine McPherson Federbeinachse integrieren;
- an der Hinterachse lässt sich die Erfindung ideal z.B. in eine Längslenkerachse oder in eine Verbundlenkerachse integrieren.

### ZEICHNUNGEN

Weitere Einzelheiten und Vorteile der Erfindung werden im Folgenden anhand von Ausführungsbeispielen und mit Bezug auf die Zeichnung beschrieben. Es zeigen:

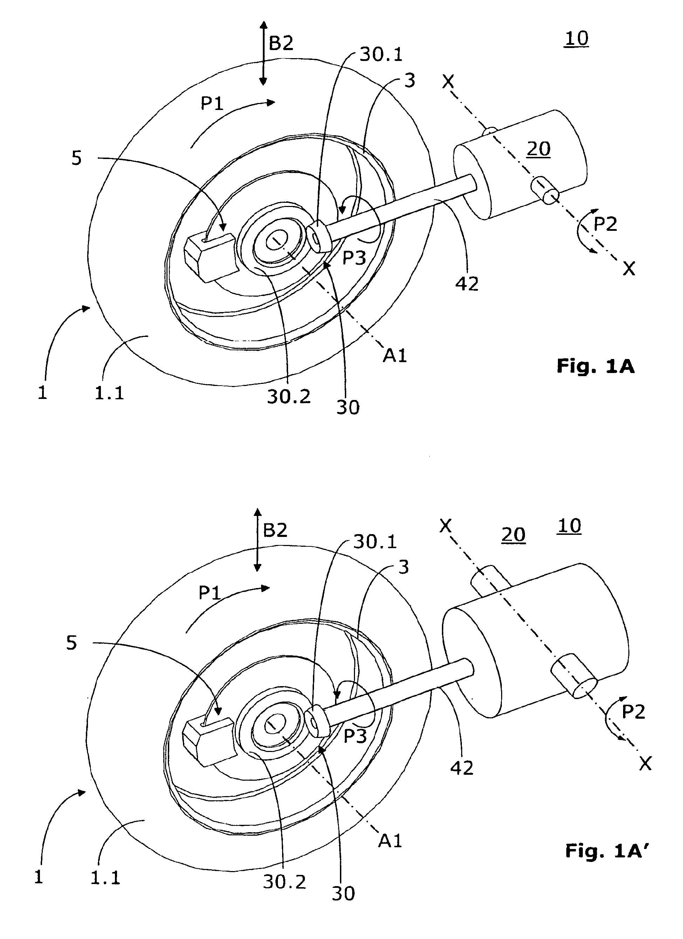

- Fig. 1A: eine erste Ausführungsform der Radnebenmotor-Anordnung gemäß der vorliegenden Erfindung, wobei das Rad bei dem Elektromotor durch ein Kegelradgetriebe angetrieben ist;
- Fig. 1A': eine Ausführungsform der Radnebenmotor-Anordnung, die ähnlich zu der in Fig. 1A gezeigten Ausführungsform ist, wobei ein grösserer und leistungsstärkerer Elektromotor eingesetzt wird;
- Fig. 1B: eine schematisierte Seitenansicht von Fig. 1A;
- Fig. 1C: eine schematisierte Seitenansicht, die das Rad nach Fig. 1A in einer extremen Stellung zeigt;
- Fig. 2A: eine weitere Ausführungsform der Radnebenmotor-Anordnung gemäß der vorliegenden Erfindung, wobei der Elektromotor fest mit dem Fahrzeug verbunden ist und eine vertikale längslaufende Bewegung in Bezug zu dem Rad ausführt und wobei der Elektromotor mit dem Rad mittels einer Kugelkeilwelle verbunden ist;

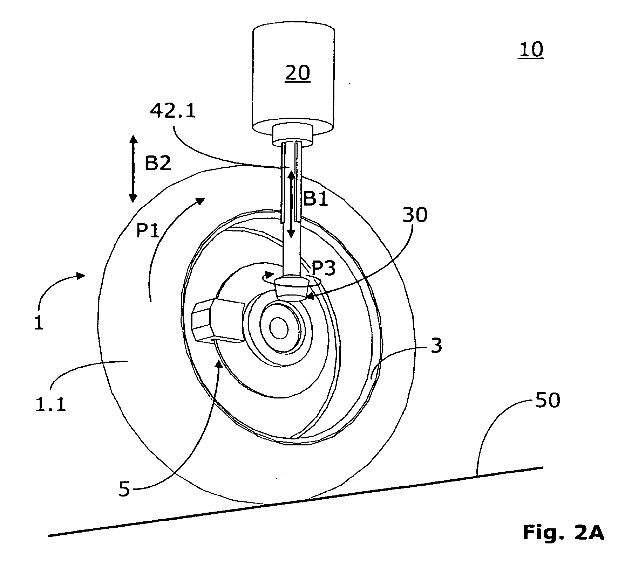

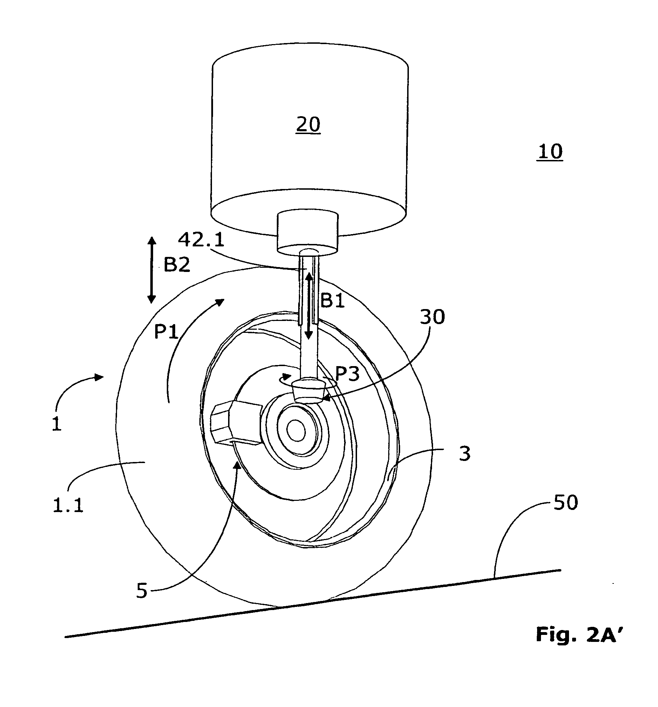

- Fig. 2A': eine Ausführungsform der Radnebenmotor-Anordnung, die ähnlich zu der in Fig. 2A gezeigten Ausführungsform ist, wobei ein grösserer und leistungsstärkerer Elektromotor eingesetzt wird;

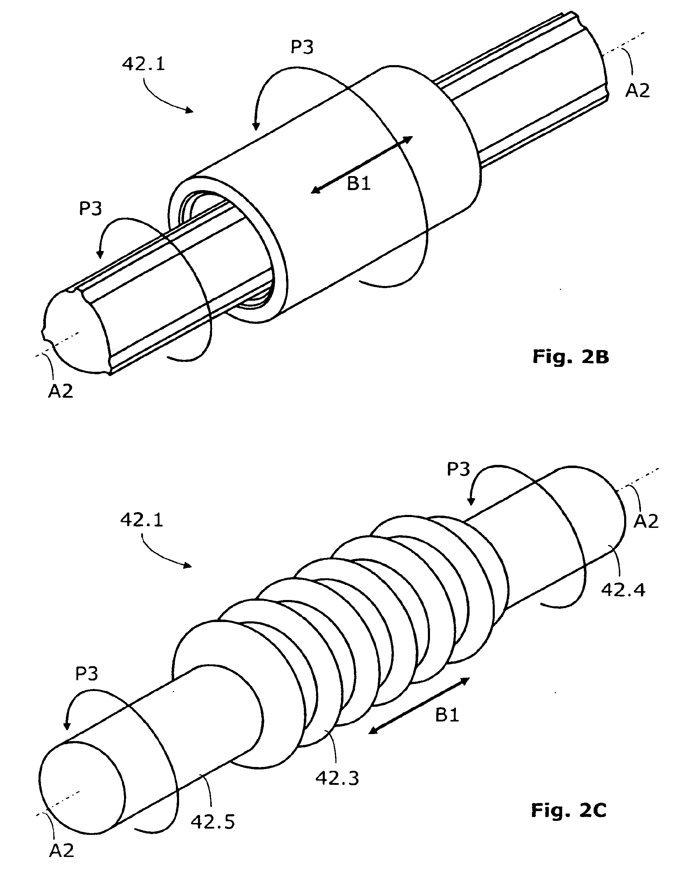

- Fig. 2B: eine schematisierte Ansicht einer als Koppelwelle dienenden Kugelkeilwelle, die in der Ausführungsform von Fig. 2A oder 2A' zum Einsatz kommen kann;
- Fig. 2C: eine schematisierte Ansicht einer als Koppelwelle dienenden Faltenbalg-Kupplung, die z.B. in der Ausführungsform von Fig. 2A oder 2A' zum Einsatz kommen kann;

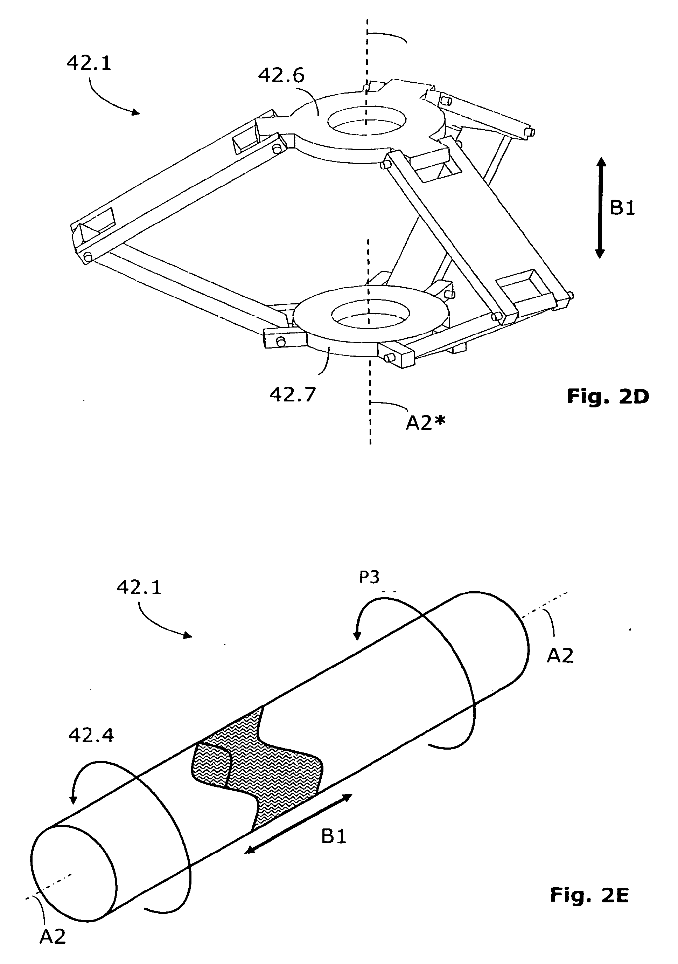

- Fig. 2D: eine schematisierte Ansicht einer als Koppelwelle dienenden Antriebskinematik, die z.B. in der Ausführungsform von Fig. 2A oder 2A' zum Einsatz kommen kann;
- Fig. 2E: eine schematisierte Ansicht einer weiteren Koppelwelle, die z.B. in der Ausführungsform von Fig. 2A oder 2A' zum Einsatz kommen kann;

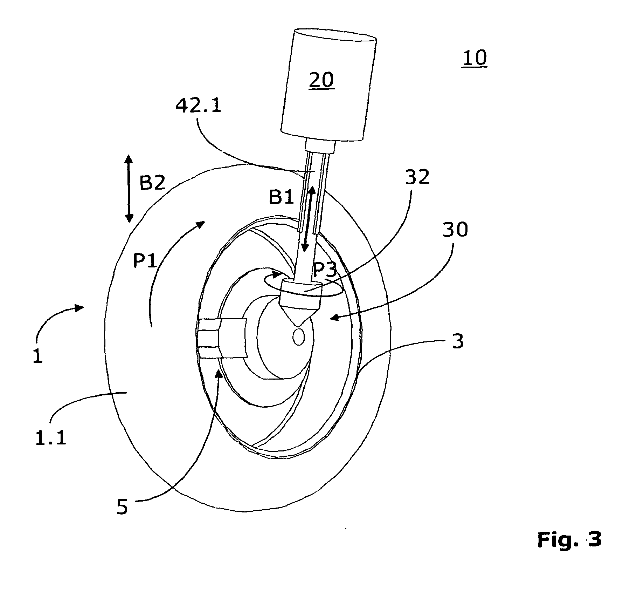

- Fig. 3: eine weitere Ausführungsform der Radnebenmotor-Anordnung gemäß der vorliegenden Erfindung, wobei das Kegelradgetriebe in einem Antriebsgehäuse eingeschlossen ist;

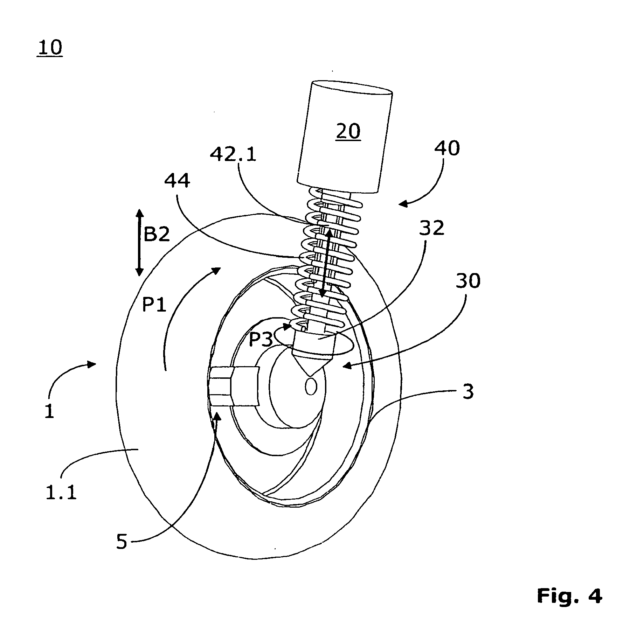

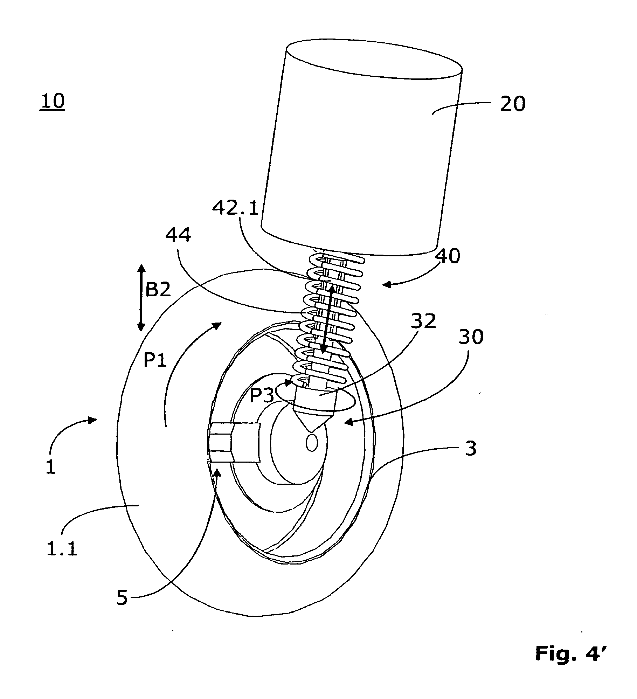

- Fig. 4: eine weitere Ausführungsform der Radnebenmotor-Anordnung gemäß der vorliegenden Erfindung, wobei konzentrisch mit der Welle, die den Elektromotor mit dem Kegelradgetriebe verbindet, ein Feder angeordnet ist;
- Fig. 4': eine Ausführungsform der Radnebenmotor-Anordnung, die ähnlich zu der in Fig. 4 gezeigten Ausführungsform ist, wobei ein grösserer und leistungsstärkerer Elektromotor eingesetzt wird;

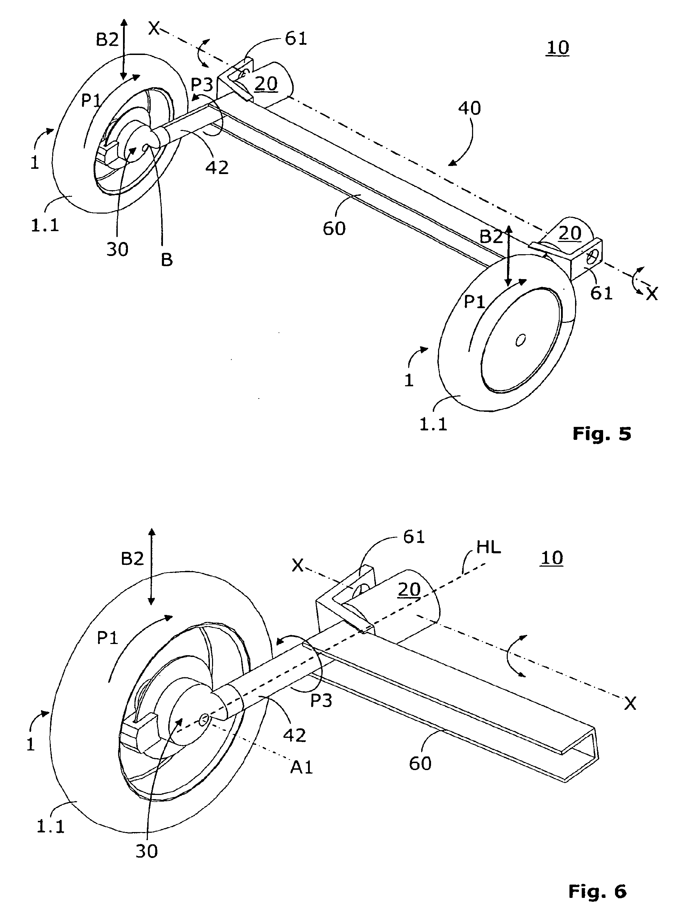

- Fig. 5: ein Hinterachsenmodul mit zwei gemäß der Erfindung angeordneten Radnebenmotor-Anordnungen; wobei die Elektromotoren Winkelbewegungen in Bezug zu den Rädern ausführen können;
- Fig. 6: ein Teil eines Hinterachsenmoduls;

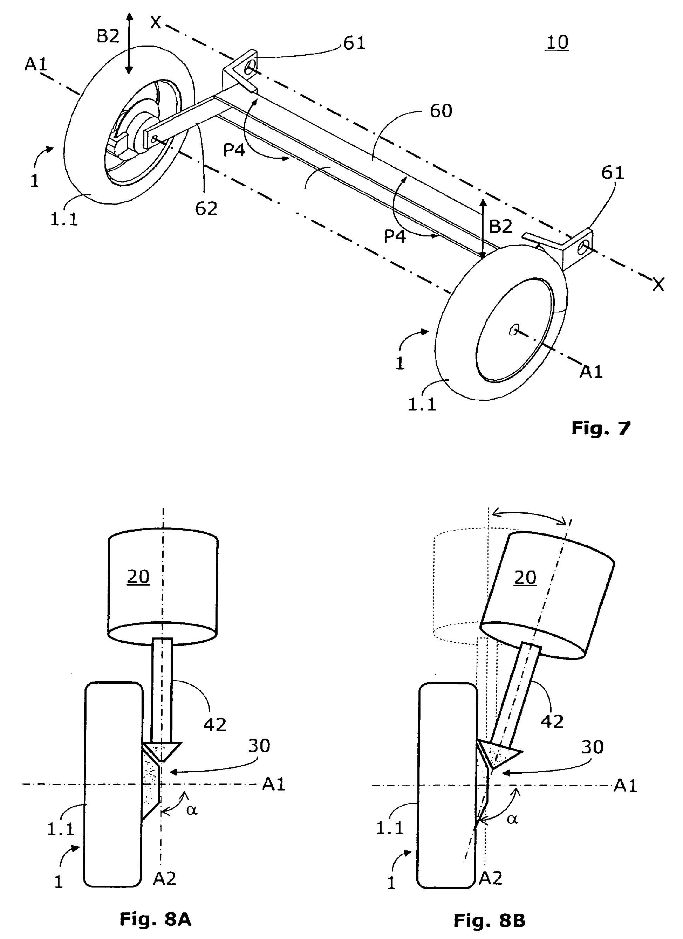

- Fig. 7: ein Hinterachsenmodul mit zwei gemäß der Erfindung angeordneten Radnebenmotor-Anordnungen;;
- Fig. 8A: eine schematisierte Ansicht einer weiteren Radnebenmotor-Anordnung, die einen 90 Grad Winkel einschliesst;
- Fig. 8B: eine schematisierte Ansicht einer weiteren Radnebenmotor-Anordnung, die einen Winkel einschliesst, der grösser ist als 90 Grad.

### DETAILLIERTE BESCHREIBUNG

Eine erste Ausführungsform der Erfindung wird nun in Bezug auf die Fig. 1A beschrieben. In Fig. 1A ist das Rad 1 eines Fahrzeugs gezeigt. Das Rad 1 rotiert bei sich bewegendem Fahrzeug um die Achse A1, wie durch den Pfeil P1 angedeutet. Die Radnabe ist nicht gezeigt, verläuft aber konzentrisch zur Achse A1.

Ein erstes erfindungsgemäßes Fahrzeug umfasst eine Radaufhängung 40 (siehe z.B. Fig. 4, 4', 5, 6, 7), ein anzutreibendes Rad 1, das mittels der Radaufhängung 40 mit dem Fahrzeug verbunden ist, sowie einen Elektromotor 20. Die Radaufhängung 40 ist in Fig. 1A nicht gezeigt. Weiterhin umfasst das Fahrzeug ein Kegelradgetriebe 30, das mit dem Rad 1 direkt verbunden ist und das eine feste Getriebeuntersetzung aufweist. Zwischen dem Elektromotor 20 und dem Kegelradgetriebe 30 ist eine Welle 42 so angeordnet, dass der Elektromotor 20 mittels der Welle 42 und dem Kegelradgetriebe 30 antriebstechnisch (d.h. zur Übertragung von Rotationen) mit dem Rad 1 verbunden ist. D.h., der Elektromotor 20 setzt bei dem Anlegen einer Spannung oder eines Stroms eine Drehbewegung in eine Drehbewegung der Welle 42 um. Diese Drehbewegung wird von einem Ritzel 30.1 auf ein Tellerrad 30.2 übertragen. Das Tellerrad 30.2 wiederum ist mit dem Rad 1 so verbunden, dass die Drehbewegung des Tellerrads 30.2 in eine Drehbewegung des Rades 1 um die Achse A1 umgesetzt wird. Auf diesem Weg kann das Rad 1 vom Elektromotor 20 direkt angetrieben werden. Der Antrieb erfolgt über eine sogenannte Winkelgetriebe-Anordnung 30, die hier ein Ritzel 30.1 und ein Tellerrad 30.2 umfasst. Die Winkelgetriebe-Anordnung 30 wird hier allgemein als Kegelradgetriebe 30 bezeichnet. Gemäß Erfindung ist die Befestigung des Elektromotors 20 am Fahrzeug so ausgelegt, dass der Elektromotor 20 bewegungstechnisch im Wesentlichen von Radbewegungen B2 des Rades 1 entkoppelt ist.

Es wird im Zusammenhang mit der vorliegenden Erfindung bewusst der Begriff der antriebstechnischen Verbindung zwischen dem Elektromotor 20 und dem Rad 1 verwendet. Dieser Begriff soll zum Ausdruck bringen, dass die Gesamtkonstallation so gewählt ist, dass Antriebsmomente, d.h. Rotationsbewegungen, vom Elektromotor 20 auf das Rad 1 übertragen werden. Andere Bewegungen, die durch Bewegungen der Karosserie relativ zum Rad 1 entstehen, werden durch die antriebstechnische Verbindung nicht übertragen.

In Fig. 1A ist rein schematisch angedeutet, dass der Elektromotor 20 im Bereich eines fahrzeugseitigen Endes der Radaufhängung 40, die mit dem Fahrzeug direkt verbunden ist, mechanisch befestigt ist. Der Befestigungspunkt ist in Fig. 1A durch eine Linie X-X angedeutet. Die Linie X-X verläuft hier genau durch den Schwerpunkt des Elektromotors 20. Durch den Doppelpfeil P2 ist gezeigt, dass die Radaufhängung 40 so ausgelegt ist, dass das Rad 1 samt Radaufhängung 40 um diese Linie X-X geschwenkt werden kann, wenn sich das Fahrzeug in Bewegung befindet. Die Linie X-X definiert quasi eine neutrale Linie. Entsprechend wird der Elektromotor 20 bei dieser Ausführungsform der Erfindung so in Bezug zu dieser Linie X-X angeordnet und mit dem Fahrzeug verbunden, dass der Abstand zwischen dem Elektroantrieb 20 und der Radnabe oder Achse A1 konstant bleibt.

In Fig. 1A' ist eine Ausführungsform gezeigt, die der Ausführungsform nach Fig. 1A entspricht. Der wesentliche Unterschied liegt darin, dass ein deutlich grösserer und drehmomentstärkerer Elektromotor 20 zum Einsatz kommt. Solche grösseren Elektromotoren kommen zum Beispiel zum Einsatz, wenn das Fahrzeug mit besseren Fahrleistungen ausgestattet sein soll. Anhand von Fig. 1A' ist unmittelbar zu erkennen, dass ein solcher Elektromotor 20 nicht im Inneren der Felge 3 des Rades 1 untergebracht werden könnte. Durch die Radnebenanordnug jedoch hat man genügend Freiheitsgrade auch deutlich grössere Motoren 20 einzusetzen.

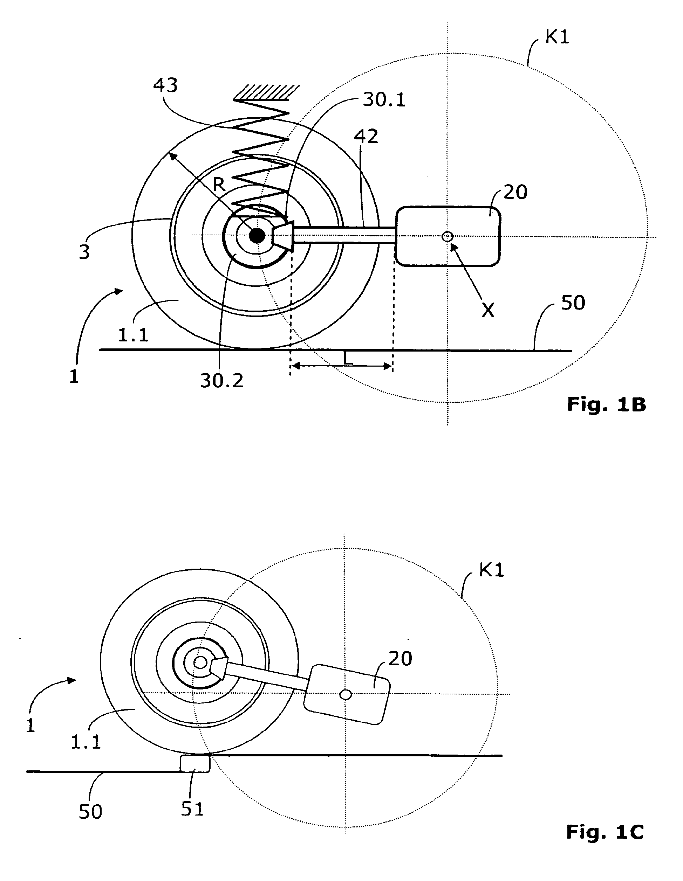

In Fig. 1B ist angedeutet, dass die Linie X-X das Zentrum eines Kreises K1 definiert. Das Rad 1 macht beim Überfahren von Hindernissen kleinere Winkelbewegungen um die Linie X-X, respektive um das Zentrum des Kreises K1. In Fig. 1C ist ein Zustand gezeigt, bei dem das Rad 1 um einige Grad entlang des Umfangs des Kreises K1 nach oben (im Uhrzeigersinn) bewegt wurde. Eine solche Situation kann zu Beispiel dann auftreten, wenn das Fahrzeug mit dem Rad 1 über eine Bordsteinkante 51 fährt. Anhand von Fig. 1C ist zu erkennen, dass der Elektromotor 20 sich entsprechend solidarisch mitdreht. Der Abstand zwischen dem Elektromotor 20 und der Achse A1 bleibt jedoch stets gleich.

In Fig. 1B ist rein schematisch angedeutet, dass ein Federbein 43 und/oder Dämpfer als Teil der Radaufhängung 40 eingesetzt werden, um die Bewegungen B2 zu dämpfen. Das Federbein 43 ist vorzugsweise mit einem Gehäuse des Kegelradgetriebes 30 oder mit einem Radnabenlager verbunden.

In Fig. 1A, 1A', Fig. 1B und Fig. 1C sind die folgenden weiteren Details zu erkennen. Das Rad 1 umfasst einen Reifen 1.1, der auf einer Felge 3 sitzt. Im Inneren der Felge 3 ist eine Bremsanordnung 5 mit Bremsscheibe, die konzentrisch zur Achse A1 sitzt, und Bremsbacken angeordnet.

Ein erfindungsgemäßes Fahrzeug zeichnet sich also dadurch aus, dass durch die Art und den Ort der Befestigung (hier als Gesamtkonstallation bezeichnet) des Elektromotors 20 der Elektromotor 20 Bestandteil der gefederten Masse des Fahrzeugs ist. Lediglich das Kegelradgetriebe 30 sitzt direkt am Rad 1 und gehört zur ungefederten Masse.

Der Ort der Befestigung des Elektromotors 20, respektive die Anordnung desselben, ist also für das Einsetzen eines Elektromotors 20 mit einem Kegelradgetriebe 30 essentiell. Durch die hier beschriebenen Gesamtkonstellationen oder -konfigurationen, ist es möglich den Elektromotor 20 außerhalb des Felgeninnenraums oder ganz ausserhalb des Umfangs des Rades 1 anzuordnen und ihn trotzdem antriebstechnisch mit dem Rad 1 zu verbinden.

Vorzugsweise wird der Ort der Befestigung des Elektromotors 20, respektive die Anordnung desselben, so gewählt, dass die Welle 42 eine Wellenlänge L aufweist, die mindestens ca. dem halben Radius R/2 des Rads 1 entspricht.

In den Figuren 1A, 1A' bis 1C sind Ausführungsformen gezeigt, bei welcher der Elektromotor 20 im Bereich eines Fahrzeugsendes der Radaufhängung 40, die mit dem Fahrzeug direkt verbunden ist, mechanisch befestigt ist.

Ein anderer Ort der Befestigung des Elektromotors 20, respektive eine andere Anordnung desselben, ist nun in Fig. 2A gezeigt. Ein zweites erfindungsgemäßes Fahrzeug umfasst wiederum eine Radaufhängung 40 (siehe z.B. Fig. 4, 4', 5, 6, 7), ein anzutreibendes Rad 1, das mittels der Radaufhängung 40 mit dem Fahrzeug verbunden ist, sowie einen Elektromotor 20. Die Radaufhängung 40 ist in Fig. 2A nicht gezeigt. Weiterhin umfasst das Fahrzeug ein Kegelradgetriebe 30, das mit dem Rad 1 direkt verbunden ist und das eine feste Getriebeuntersetzung aufweist. Zwischen dem Elektromotor 20 und dem Kegelradgetriebe 30 ist eine Welle 42 so angeordnet, dass der Elektromotor 20 auch bei dieser Ausführungsform mittels der Welle 42 und dem Kegelradgetriebe 30 antriebstechnisch mit dem Rad 1 verbunden ist. Auf diesem Weg kann das Rad 1 vom Elektromotor 20 direkt angetrieben werden. Der Antrieb erfolgt über eine sogenannte Winkelgetriebe-Anordnung 30, die hier ein Ritzel 30.1 und ein Tellerrad 30.2 umfasst. Gemäß Erfindung ist die Befestigung des Elektromotors 20 am Fahrzeug so ausgelegt, dass der Elektromotor 20 auch bei dieser Ausführungsform bewegungstechnisch im Wesentlichen von Radbewegungen B2 des Rades 1 entkoppelt ist.

Um eine solche Anordnung von Elektromotor 20, Welle 42, Kegelradgetriebe 30 und Rad 1 zu ermöglichen, wird hier eine sogenannte Kugelkeilwelle 42.1 als Welle 42 eingesetzt. Eine Kugelkeilwelle 42.1 ist eine Welle mit veränderlicher Wellenlänge L. Gemäß Erfindung ist die Befestigung des Elektromotors 20 am Fahrzeug so ausgelegt, dass der Elektromotor 20 bewegungstechnisch im Wesentlichen von Radbewegungen B2 des Rades 1 entkoppelt ist. Um dies in der in Fig. 2A gezeigten Gesamtkonstellation zu ermöglichen, muss der Abstand zwischen dem Elektromotor 20 und der Radnabe des Rades 1, respektive dem Tellerrad 30.2 variabel sein. Diese Variabilität wird bei dieser Ausführungsform durch eine Kugelkeilwelle 42.1 ermöglicht. Die Kugelkeilwelle 42.1 ermöglicht es eine Antriebsverbindung zwischen dem Kegelradgetriebe 30 und dem Elektromotor 20, trotz längslaufender Bewegung B2 der Rades 1 in Bezug zu dem Elektromotor 20, aufrecht erhalten zu können. Die längslaufende Bewegung B2 ist vorzugsweise eine Bewegung, die vertikal zu einem Fahrbelag 50 gerichtet ist.

Wenn das Rad 1 z.B. durch eine Fahrbahnunebenheit relativ zur Fahrzeugkarosserie nach oben bewegt wird, verkürzt sich die Kugelkeilwelle 42.1. Wenn das Rad 1 etwas nach unten sinkt, verlängert sich die Kugelkeilwelle 42.1. Die entsprechende Ausgleichsbewegung der Kugelkeilwelle 42.1 ist durch den Doppelpfeil B1 angedeutet.

Alle anderen Elemente des Rades 1 können identisch sein mit denen des in den Figuren 1A, 1A' bis 1C gezeigten Rades 1.

In Fig. 2A' ist eine Ausführungsform gezeigt, die der Ausführungsform nach Fig. 2A entspricht. Der wesentliche Unterschied liegt darin, dass ein deutlich grösserer und drehmomentstärkerer Elektromotor 20 zum Einsatz kommt. Solche grösseren Elektromotoren kommen zum Beispiel zum Einsatz, wenn das Fahrzeug mit besseren Fahrleistungen ausgestattet sein soll. Anhand von Fig. 2A' ist unmittelbar zu erkennen, dass ein solcher Elektromotor 20 nicht im Inneren der Felge 3 des Rades 1 ungebracht werden könnte. Durch die Radnebenanordnug jedoch hat man genügend Freiheitsgrade auch deutlich grössere Motoren 20 einzusetzen.

In Fig. 2B ist eine schematisierte Ansicht einer Kugelkeilwelle 42.1 gezeigt, die in der Ausführungsform von Fig. 2A zum Einsatz kommen kann. Eine solche Kugelkeilwelle 42 erlaubt es Drehbewegungen um die Längsachse zu übertragen. Dadurch wird die antriebstechnische Verbindung gewährleistet. Die Kugelkeilwelle 42.1 lässt sich jedoch innerhalb gewisser Grenzen strecken und stauchen. Dadurch ist es möglich eine Variation des Abstandes zwischen dem Kegelradgetriebe 30 und der Position des Elektromotors 20 auszugleichen.

Die Kugelkeilwelle 42.1 ist eine Komponente die eingesetzt wird, um Drehbewegungen zu übertragen wenn an der Welle größere axiale Verschiebungen ausgeglichen werden müssen. Es lassen sich relativ große Drehmomente (Antriebsmomente) spielfrei übertragen. Die Reibung beim Verschieben der Komponenten der Kugelkeilwelle 42.1 in axialer Richtung ist durch die Verwendung von Kugeln als Wälzkörper sehr gering.

Statt einer Kugelkeilwelle 42.1 kann auch eine sogenannte Faltenbalgverbindung 42.1, wie in Fig. 2C gezeigt, eingesetzt werden, um Antriebsmomente vom Elektromotor 20 auf das Rad 1 zu übertragen, um aber auch gleichzeitig für eine Entkopplung translatorischer Bewegungen zu sorgen. Der Faltenbalg 42.3 verbindet zwei Wellenstümpfe 42.4 und 42.5 so miteinander, dass sich beide Wellenstümpfe 42.4 und 42.5 mit der gleichen Rotationsgeschwindigkeit drehen, wie durch die Pfeile P3 angedeutet. In Richtung des Doppelpfeiles B1 sind translatorische Bewegungen möglich.

Statt einer Kugelkeilwelle 42.1 oder einer Faltenbalgverbindung 42.1 kann auch eine sogenannte Antriebskinematik 42.1, wie in Fig. 2D gezeigt, eingesetzt werden, um Antriebsmomente vom Elektromotor 20 auf das Rad 1 zu übertragen, um aber auch gleichzeitig für eine Entkopplung translatorischer Bewegungen zu sorgen. Die im Bild gezeigte Kinematik 42.1 ist ebenfalls torsionssteif in radialer Richtung und kann in achsialer Richtung durch drei Doppelgelenke Bewegungen ausgleichen. Der oberer Ring 42.6 ist zum Anschluss an den Elektromotor 20 gedacht, der untere Ring 42.7 zum Anschluss eines Wellenstumpfs, der das Ritzel 30.1 trägt. Die beiden Achsen A2 und A2* sind in translatorischer Richtung (wie durch den Doppelpfeil B1 angedeutet) entkoppelt, während Antriebsmomente übertragen werden können.

Statt einer Kugelkeilwelle 42.1, einer Faltenbalgverbindung 42.1, oder einer Antriebskinematik 42.1 kann auch eine Wellenverbindung 42.1, wie in Fig. 2E gezeigt, eingesetzt werden, um Antriebsmomente vom Elektromotor 20 auf das Rad 1 zu übertragen, um aber auch gleichzeitig für eine Entkopplung translatorischer Bewegungen zu sorgen. Die Wellenverbindung 42.1 kann zum Beispiel einen spiralförmig umlaufenden Schlitz im äusseren Umfangsbereich aufweisen. Wenn man die so geschlitzte Welle nun in B1-Richtung auseinander zieht, so erhält man einen Körper, der einer Spiralfeder oder einem Balg 42.3 gleicht.

Die verschiedenen möglichen Wellenverbindungen werden hier zusammenfassend als Koppelwellen 42.1 bezeichnet.

Eine weitere Ausführungsform der Erfindung ist in Fig. 3 gezeigt. Die einzelnen Elemente dieser Ausführungsform können denjenigen der Fig. 2A oder 2A' entsprechen. Auch hier kommt eine der genannten Koppelwellen 42.1 zum Einsatz. In Fig. 3 ist jedoch zu erkennen, dass das Kegelradgetriebe 30 vorzugsweise in einem Gehäuse 32 untergebracht ist, um dem Kegelradgetriebe 30 vor Verschmutzung zu schützen. Außerdem umfasst das Gehäuse 32 Lager für das Ritzel 30.1 und für das Tellerrad 30.2. Durch den Einsatz eines Gehäuses 32 mit Lagern wird die genaue Einbauposition des Ritzels 30.1 und des Tellerrades 30.2 vorgegeben. Selbst bei einer Auf- und Abbewegung B2 des Rades 1 bleibt die Einbauposition von Ritzel 30.1 und Tellerrad 30.2 erhalten. Lediglich die erwähnte Koppelwelle 42.1 führt entsprechende Kompensationsbewegungen B1 aus.

Ein solches Gehäuse 32 kann auch in allen anderen Ausführungsformen zum Einsatz kommen. Außerdem kann die Welle 42 oder die Koppelwelle 42.1 bei den verschiedenen Ausführungsformen in einem Gehäuse sitzen, wie zum Beispiel in Fig. 5 zu erkennen ist. Vorzugsweise dient eine Schmutzmanschette als Gehäuse für die Koppelwelle 42.1. Eine Faltenbalgkupplung 42.1 nach Fig. 2C braucht keine solche Schmutzmanschette als Gehäuse.

Eine weitere Ausführungsform der Erfindung ist in Fig. 4 gezeigt. Diese Ausführungsform ist besonders bevorzugt und eignet sich besonders für den Einsatz an einem Vorderrad eines Fahrzeugs. Die einzelnen Elemente dieser Ausführungsform können denjenigen der Fig. 3 entsprechen. Auch hier kommt eine Koppelwelle 42.1 zu Einsatz. In Fig. 4 ist jedoch zu erkennen, dass die Koppelwelle 42.1 im Inneren einer Feder 44 sitzt. Der Elektromotor 20 befindet sich am oberen Ende der Feder 44 und ist mit dem Fahrzeug verbunden. Die Feder 44 ist ein Teil der Radaufhängung 40.

In Fig. 4' ist eine Ausführungsform gezeigt, die der Ausführungsform nach Fig. 4 entspricht. Der wesentliche Unterschied liegt darin, dass ein deutlich grösserer und drehmomentstärkerer Elektromotor 20 zum Einsatz kommt. Solche grösseren Elektromotoren kommen zum Beispiel zum Einsatz, wenn das Fahrzeug mit besseren Fahrleistungen ausgestattet sein soll. Anhand von Fig. 4' ist unmittelbar zu erkennen, dass ein solcher Elektromotor 20 nicht im Inneren der Felge 3 des Rades 1 untergebracht werden könnte. Durch die Radnebenanordnug jedoch hat man genügend Freiheitsgrade auch deutlich grössere Motoren 20 einzusetzen.

Die Ausführungsform der Figuren 4 und 4' lässt sich ideal in eine McPherson Federbein Achse integrieren. McPherson Federbein Achsen sind besonders kostengünstig und platzsparend und werden bei den meisten Serienfahrzeugen eingesetzt.

Auch bei diesen Ausführungsformen gehört der Elektromotor 20 nicht zur ungefederten sondern zur gefederten Masse des Fahrzeugs.

Eine weitere Ausführungsform der Erfindung ist in Fig. 5 gezeigt. Diese Ausführungsform ist besonders bevorzugt und eignet sich besonders für den Einsatz an den Hinterrädern eines Fahrzeugs. Die einzelnen Elemente dieser Ausführungsform können denjenigen der anderen Ausführungsformen entsprechen. In dieser Abbildung ist ein Teil der Radaufhängung 40 gezeigt. Es kommt ein Querträger 60 zu Einsatz, der an zwei Punkten mittels Winkeln 61 mit der Karosserie des Fahrzeugs verbunden ist. Diese fahrzeugseitigen Punkte der Radaufhängung 40 definieren auch hier wieder eine neutrale Linie X-X, wie in Fig.1A und Fig. 1A'. Bei der gezeigten Ausführungsform ist jedem der Räder 1 ein Elektromotor 20 zugeordnet. Die Elektromotoren 20 sitzen wiederum vorzugsweise genau auf der Linie X-X, um sicher zu stellen, dass sich der Abstand zwischen den Elektromotoren 20 und den Radnaben, respektive der Achse A1 nicht ändert. Es ist aber nicht zwingend notwendig, dass die Elektromotoren 20 genau auf dieser Linie X-X sitzen. Sie können auch etwas neben dieser Linie angeordnet sein.

Fig. 6 zeigt Details der Ausführungsform nach Fig. 5. Die Verbindungslinie HL zwischen dem Elektromotor 20 und der Radnabe, respektive der Achse A1, ist in Fig. 6 als gestrichelte Linie eingezeichnet. Diese Verbindungslinie HL fällt mit der Längsachse der Welle 42 zusammen. Die Welle 42 dreht sich um diese Längsachse, wie durch den Doppelpfeil P3 angedeutet.

Falls der Elektromotor 20 in einer der Ausführungsformen nicht auf der neutralen Linie X-X sitzt, so führt das zu kleinen Hebelkräften, die einen negativen Einfluss auf das Federungsverhalten des Fahrzeugs haben können. Das hier beschriebene Prinzip der antriebstechnischen Verbindung des Elektromotors 20 mit dem Rad 1 funktioniert aber weiterhin.

In Fig. 7 ist eine andere aber ähnliche Hinterradaufhängung 40 gezeigt. In Fig. 7 ist zu erkennen, dass der Querträger 60 mittels Schenkeln 62 mit dem Gehäuse 32 das Kegelradgetriebes 30 verbunden sein kann. Die Welle 42 (nicht in Fig. 7 gezeigt) kann (muss aber nicht) parallel zu diesen Schenkeln 62 (auch führende Längslenker genannt) verlaufen. Der Querträger 60 samt den daran befestigten Rädern 1 kann eine Schwenkbewegung um die Linie X-X machen, wie durch die Doppelpfeile P4 angedeutet. Diese Schwenkbewegung tritt auf wenn die Räder sich nach oben oder unten bewegen, wie durch den Doppelpfeil B2 gezeigt. Der Querträger 60 dient hier auch als ein Torsionselement, das sich in sich selbst verwinden kann, um die Bewegungen der beiden Hinterräder voneinander zu entkoppeln.

In den Figuren 5, 6 und 7 können Federbeine und/oder Dämpfer und/oder Torsionselemente (z.B. Drehstabfedern) als Teil der Radaufhängung 40 eingesetzt werden, um die Bewegungen B2 zu dämpfen. Dieser Federn oder Torsionselemente sind nicht in den Figuren gezeigt.

Eine solche Hinterachsaufhängung wie in den Figuren 5, 6 und 7 gezeigt, wurde bisher primär für nicht angetriebene Hinterräder eingesetzt, weil diese Art der Radaufhängung besonders einfach ist, Platz spart und kostengünstig ist. Der als Verbindungsprofil dienende Querträger 60 macht eine aufwendige Lagerung am Fahrzeugboden überflüssig und kann den Stabilisator teilweise ersetzen. Gemäß Erfindung kann eine solche einfache Hinterachskonfiguration problemlos mit zwei Elektroantrieben ausgestattet werden, ohne große bauliche Änderungen vornehmen zu müssen.

Die Ausführungsform nach Fig. 5, Fig. 6 und Fig. 7 lässt sich ideal in bekannte Längslenkerachsen und Verbundlenkerachsen integrieren. Verbundlenkerachsen sind besonders kostengünstig und platzsparend und werden bei vielen Serienfahrzeugen eingesetzt. Eine solche Verbundlenkerachse ist z.B. durch die DE 196 42 995 C1 bekannt.

Die Erfindung lässt sich analog aber auch bei einzeln aufgehängten Hinterrädern einsetzten.

Im Folgenden sind Details zu Elektromotoren 20 angegeben, die sich besonders für den Einsatz im Zusammenhang mit der Erfindung eignen.

Die höchste Leistungsdichte (Verhältnis von Leistung zu Baugröße und Gewicht) erreicht man mit permanenterregten Synchronmotoren 20. Hierbei wird mit Hilfe eines Frequenzumrichters ein in der Frequenz, Spannung und Strom regelbarer Drehstrom erzeugt, der im Stator des Elektromotors 20 ein elektromagnetisches Drehfeld erzeugt. Der Rotor trägt als feldbildende Komponente Permanentmagnete, vor allem Seltenerd-Materialien wie Neodym-Eisen-Bor (englisch Neodym-Ferrit-Bor kurz NeFeB) oder Samarium-Kobalt (kurz SmCo) eigenen sich aufgrund hoher Remanenz und Koerzitivfeldstärkewerte ausgezeichnet für einen kompakten Rotor eines permanenterregten Synchron-Elektromotors 20.

Der Stator des Elektromotors 20 befindet sich meist außen und ist mit dem Gehäuse verbunden, der Rotor befindet sich innen und ist direkt mit der Welle verbunden. Die Welle des Elektromotors 20 wiederum ist getriebelos mit der Welle 42 oder mit der Kugelkeilwelle 42.1 verbunden.

Synchronmotoren lassen sich außerdem vorteilhaft als Generator verwenden, um beim Fahrzeug die kinetische Energie beim Bremsen wieder in elektrische Energie zu wandeln.

Synchronmotoren, die auf niedrige Drehzahlen ausgelegt sind, benötigen eine hohe Polzahl und damit eine große Anzahl der kostspieligen Magnete. Mit der Polzahl steigt auch der erforderliche Durchmesser des Rotors um die Magnete anzubringen. Gegen die Verwendung solcher hochpoliger Elektromotoren sprechen die Kosten und das Gewicht für die hohe Anzahl von Magneten und Wicklungen sowie der große Durchmesser.

Elektromotoren 20 mit Nenndrehzahlen von 4000 - 6000 Umdrehungen/Minute benötigen eine deutlich geringere Polzahl, lassen sich daher sehr kompakt, leicht und kostengünstig herstellen. Diese Art von Elektromotoren 20 wird daher im Zusammenhang mit der Erfindung bevorzugt.

Der folgende Elektromotor 20 eignet sich besonders im Zusammenhang mit der Erfindung.

Permanenterregter Hochleistungs-Synchronmotor mit folgender Charakteristik:
- nominale Leistung ca. 20 KW,
- nominale Drehzahl 6000 U/min,
- nominales Drehmoment 40 Nm,
- Baugröße ca. 200 mm Länge, ca. 200 mm Durchmesser
- Gewicht ca. 20 bis 30 Kg pro Elektromotor 20.

Ein mit solchen Elektromotoren 20 an jedem Rad ausgestattetes Fahrzeug erreicht eine Gesamtleistung von ca. 80 KW (ca. 109 PS). Diese Baugröße lässt sich gemäß Erfindung problemlos als Radnebenmotor unterbringen.

Bei einem direkt am Rad angebrachten Elektromotor würde das Gewicht von 20 bis 30 Kg deutliche Nachteile im Fahrverhalten bringen.

Bei einem Mittelklassefahrzeug wird bei einer Höchstgeschwindigkeit von 180 km/h am Rad 1 eine Drehzahl von 1500 U/min benötigt (der Radumfang bei der verbreiteten Reifengröße 205/55-16 beträgt ca. 2 m). Mit einem Kegelradgetriebe 30 lassen sich Untersetzungen von 1:3 bis 1:4 besonders vorteilhaft realisieren. Mit modernen Kegelradgetrieben 30 ist ein Wirkungsgrad von 98.5% inklusive der Lagerung üblich und liegt damit auf einem vergleichbaren Niveau wie Stirnradgetriebe. In Kombination mit dem im Beispiel genannten Elektromotor 20 und einem Kegelradgetriebe 30 mit der Untersetzung 1:4 erreicht man die oben angegebene maximale Raddrehzahl und ein Moment von 160 Nm pro Rad (abzüglich dem Wirkungsgradverlust von 1,5%).

Ein Kegelradgetriebe 30, das für dieses Ausführungsbeispiel optimiert ausgelegt ist, hat eine Größe am Tellerrad 42.2 von ca. 120 mm Durchmesser. Das Gesamtgewicht mit Gehäuse 32 und Lagerung beträgt ca. 4 Kg.

Ein erfindungsgemässes Kegelradgetriebe 30 umfasst wie beschrieben, ein Kegelradritzel 30.1 und ein entsprechendes Kegelrad-Tellerrad 30.2. Ritzel 30.1 und Tellerad 30.2 bilden zusammen ein Kegelradpaar. Es können verschiedenste Kegelräder, einschliesslich der Hypoid-Kegelräder, eingesetzt werden.

Im Folgenden sind weitere Elektromotoren aufgeführt, die im Zusammenhang mit der Erfindung eingesetzt werden können. Bei fremderregten Synchronmotoren werden keine Permanentmagnete verwendet sondern es wird das Magnetfeld des Rotors elektrisch erzeugt. Dazu sind Schleifringe und entsprechende Wartungen erforderlich. Diese Elektromotoren sind eher in höheren Leistungsbereichen zu finden, können hier aber unter Umständen auch eingesetzt werden.

Bei Asynchronmotoren wird das magnetische Feld des Rotors durch das Drehfeld der Statorwicklung im Rotor induziert. Der Rotor hat einen Schlupf gegenüber dem elektrischen Drehfeld. Der Rotor trägt aber keine Magnete sondern besteht üblicherweise aus Eisenpaketen (Kurzschlussläufer). Durch diesen einfachen Aufbau, ebenfalls ohne Schleifringe, sind Asynchronmotoren besonders kostengünstig und wartungsarm.

In den meisten Fällen werden diese Asynchronmotoren direkt am Wechselstromnetz betrieben, so dass die Drehzahl proportional zur Netzfrequenz ist. Diese Asynchronmotoren sind die typischen Arbeitsmaschinen in einer Vielzahl von Anwendungen bis in die höchsten Leistungsstufen. In Verbindung mit Frequenzumrichtern lassen sich auch geregelte Anwendungen realisieren. Allerdings sind durch den prinzipbedingten Schlupf komplexe Regelvorgänge, wie sie bei Werkzeugmaschinen benötigt werden, nicht üblich. Diese Asynchronmotoren können hier aber unter Umständen auch eingesetzt werden.

Gleichstrommotoren benötigen einen Kollektor und sind dadurch wartungsanfällig. Die Leistungsdichte ist geringer als bei Synchronmotoren. Durch die heute verfügbaren leistungsfähigen Frequenzumrichter, die man für den geregelten Betrieb von Synchron- und Asynchronmotoren benötigt, ist die Bedeutung von Gleichstrommotoren deutlich zurück gegangen. Gleichstrommotoren können hier aber unter Umständen auch eingesetzt werden.

In den Figuren 8A und 8B ist ein weiterer Vorteil der Erfindung schematisch angedeutet. Ein Elektromotor 20 kann entweder so in Bezug auf das Rad 1 angeordnet sein, dass seine Achse A2 senkrecht steht zu der Radachse A1. Diese Situation ist in Fig.8A gezeigt. Da hier der Elektromotor 20 eventuell mit dem Reifen 1.1 des Rades 1 in Kontakt kommen könnte, wählt man eine Konstallation, bei welcher der Elektromotor 20 ausserhalb des Umfangs seitlich neben oder oberhalb des Rades 1 sitzt. Hier ist die Länge L der Welle 42 vorzugsweise grösser als der Radius R des Rades 1.

In Fig. 8B ist gezeigt, dass das Kegelradgetriebe 30 so ausgelegt sein kann, dass die Welle 42 mit einem geeigneten Winkel a auf die Achse A1 zuläuft. Dieser Winkel a ist hier grösser als 90 Grad. Gemäss Fig. 8B kann der Elektromotor 20 seitlich direkt neben dem Reifen 1.1 oder seitlich neben oder oberhalb des Rades 1 sitzen.

Vorzugsweise liegt der Winkel a zwischen 85 Grad und 120 Grad.

## Patentansprüche

1. Fahrzeug, umfassend
- eine Radaufhängung (40),
- ein anzutreibendes Rad (1), das mittels der Radaufhängung (40) mit dem Fahrzeug verbunden ist,
- einen Elektromotor (20),
wobei das Fahrzeug weiterhin umfasst:
- ein Kegelradgetriebe (30), das mit dem Rad (1) direkt verbunden ist und das eine feste Getriebeuntersetzung aufweist,
- eine Welle (42; 42.1), die zwischen dem Elektromotor (20) und dem Kegelradgetriebe (30) so angeordnet ist, dass der Elektromotor (20) mittels der Welle (42, 42.1) und dem Kegelradgetriebe (30) antriebstechnisch mit dem Rad (1) verbunden ist,
**dadurch gekennzeichnet, dass**:
- die Befestigung des Elektromotors (20) am Fahrzeug so ausgelegt ist, dass der Elektromotor (20) bewegungstechnisch im Wesentlichen von Radbewegungen (B2) des Rades (1) entkoppelt ist und
- die Welle, die den Elektromotor (20) mit dem Rad antriebstechnisch verbindet, von einem neutralen Drehpunkt (X-X) des fahrzeugseitigen Endes der Radaufhängung (40) zu einem Drehpunkt des radseitigen Endes der Radaufhängung (40) verläuft.

2. Fahrzeug nach Anspruch 1, **dadurch gekennzeichnet, dass** durch die Befestigung des Elektromotors (20) der Elektromotor (20) Bestandteil der gefederten Masse des Fahrzeugs ist.

3. Fahrzeug nach Anspruch 1 oder 2, **dadurch gekennzeichnet, dass**
- der Elektromotor (20) entweder komplett außerhalb des Umfangs des Rades (1) angeordnet ist, oder
- der Elektromotor (20) seitlich neben einem Reifen (1.1) des Rades (1) angeordnet ist,
wobei der Elektromotor (20) in beiden Fällen ausserhalb einer Felge (3) des Rades (1) angeordnet ist.

4. Fahrzeug nach Anspruch 2, **dadurch gekennzeichnet, dass** der Elektromotor (20) außerhalb des Umfangs des Rades (1) angeordnet ist und die Welle (42; 42.1) eine Wellenlänge (L) aufweist, die in etwa dem Radius (R) des Rads (1) entspricht.

5. Fahrzeug nach Anspruch 2, **dadurch gekennzeichnet, dass** der Elektromotor (20) ausserhalb der Radmitte seitlich neben einem Reifen (1.1) des Rades (1) angeordnet ist und die Welle (42; 42.1) eine Wellenlänge (L) aufweist, die kürzer ist als der Radius (R) des Rads (1).

6. Fahrzeug nach einem der Ansprüche 1 bis 5, **dadurch gekennzeichnet, dass** der Elektromotor (20) so fest mit dem Fahrzeug verbunden ist, dass der Elektromotor (20) bei sich bewegendem Fahrzeug eine längslaufende Bewegung (B1) in Bezug zu dem Rad (1) ausführen kann, wobei diese längslaufende Bewegung (B1) vorzugsweise eine Bewegung ist, die vertikal oder leicht schräg zu einem Fahrbelag (50) gerichtet ist.

7. Fahrzeug nach einem der Ansprüche 1 oder 6, **dadurch**
**gekennzeichnet, dass** die Welle (42)
- eine Kugelkeilwelle (42.1) mit veränderlicher Wellenlänge (L) ist, oder
- eine Faltenbalgverbindung (42.1) mit veränderlicher Wellenlänge (L) ist, oder
- eine Antriebskinematik (42.1) mit veränderlicher Wellenlänge (L) ist, oder
- eine Koppelwelle (42.1) mit veränderlicher Wellenlänge (L) ist,
um eine Antriebsverbindung zwischen dem Kegelradgetriebe (30) und dem Elektromotor (20) trotz längslaufender Bewegung (B1) in Bezug zu dem Rad (1) aufrecht erhalten zu können, wobei diese längslaufende Bewegung (B1) vorzugsweise eine Bewegung ist, die vertikal oder leicht schräg zu einem Fahrbelag (50) gerichtet ist.

8. Fahrzeug nach einem der Ansprüche 1 oder 6, **dadurch gekennzeichnet, dass** die Verbindung des Elektromotors (20) so ausgelegt ist, dass er in der Lage ist, eine Winkelbewegung in Bezug zu dem Rad (1) auszuführen.

9. Vorrichtung (10) zur Verwendung in einem Fahrzeug, das ein anzutreibendes Rad (1) aufweist, das mittels einer Radaufhängung (40) mit dem Fahrzeug verbunden ist, **dadurch gekennzeichnet, dass** die Vorrichtung (10) umfasst:
- einen Elektromotor (20) zur bewegungstechnisch im Wesentlichen entkoppelten Lagerung am Fahrzeug,
- ein mit dem Rad (1) direkt verbundenes Kegelradgetriebe (30), mit einer festen Getriebeuntersetzung,
- eine Welle (42, 42.1) zum antriebstechnischen Verbinden des Elektromotors (20) mit dem Kegelradgetriebe (30),
wobei der Elektromotor (20), das Kegelradgetriebe (30) und die Welle (42, 42.1) so ausgelegt sind, dass im montierten Zustand
- der Elektromotor (20) Bestandteil der gefederten Masse des Fahrzeugs ist,
- der Elektromotor (20) mittels der Welle (42, 42.1) mit dem Kegelradgetriebe (30) so verbunden ist, dass der Elektromotor (20) entweder außerhalb des Umfangs des Rades (1) oder seitlich neben einem Reifen (1.1) des Rades außerhalb der Radmitte liegt und
- die Welle (42, 42.1), die den Elektromotor (20) mit dem Rad (1) antriebstechnisch verbindet, von einem neutralen Drehpunkt (X-X) des fahrzeugseitigen Endes der Radaufhängung (40) zu einem Drehpunkt des radseitigen Endes der Radaufhängung (40) verläuft.

10. Vorrichtung (10) nach Anspruch 9, **dadurch gekennzeichnet, dass** der Elektromotor (20) im Bereich des fahrzeugseitigen Endes (61) einer Radaufhängung (40), die mit dem Fahrzeug direkt verbunden ist, mechanisch befestigbar ist.

11. Vorrichtung (10) nach Anspruch 10, **dadurch gekennzeichnet, dass** der Elektromotor (20) so fest mit dem Fahrzeug verbindbar ist, dass der Elektromotor (20) im befestigten Zustand bei sich bewegendem Fahrzeug eine längslaufende Bewegung (B1) in Bezug zu dem Rad (1) ausführen kann.

12. Vorrichtung (10) nach Anspruch 10 oder 11, **dadurch gekennzeichnet, dass** die Welle (42)
- eine Kugelkeilwelle (42.1) mit veränderlicher Wellenlänge (L) ist, oder
- eine Faltenbalgverbindung (42.1) mit veränderlicher Wellenlänge (L) ist, oder
- eine Antriebskinematik (42.1) mit veränderlicher Wellenlänge (L) ist, oder
- eine Koppelwelle (42.1) mit veränderlicher Wellenlänge (L) ist,
um eine Antriebsverbindung zwischen dem Kegelradgetriebe (30) und dem Elektromotor (20) trotz längslaufender Bewegung (B1) in Bezug zu dem Rad (1) aufrecht erhalten zu können, wobei diese längslaufende Bewegung (B1) vorzugsweise eine Bewegung ist, die vertikal oder leicht schräg zu einem Fahrbelag (50) gerichtet ist.

13. Vorrichtung (10) nach einem der Ansprüche 9 - 12, **dadurch gekennzeichnet, dass** der Elektromotor (20) so ausgelegt ist, dass er durch die Verbindung mit dem fahrzeugseitigen Ende der Radaufhängung (40) in der Lage ist eine Winkelbewegung in Bezug zu dem Rad (1) auszuführen.

14. Vorrichtung (10) nach einem der Ansprüche 9 - 12, **dadurch gekennzeichnet, dass** die Vorrichtung (10) so ausgelegt ist, dass die Verbindung zwischen dem Kegelradgetriebe (30) und dem Elektromotor (20) trotz Winkelbewegungen erhalten bleibt, die Welle (42, 42.1), die den Elektromotor (20) mit dem Rad (1) verbindet, in einer gleichen neutralen Ebene (E) angeordnet werden kann, wie ein Drehpunkt (X-X) des fahrzeugseitigen Endes der Radaufhängung und eine Achse (A1) des radseitigen Endes der Radaufhängung (40).

15. Vorrichtung (10) nach einem der Ansprüche 9 bis 14, **dadurch gekennzeichnet, dass** das Kegelradgetriebe (30) in einem Antriebsgehäuse (32) eingeschlossen und/oder gelagert ist.

## Claims

1. Vehicle comprising
- a wheel suspension (40),
- a wheel (1) to be driven, connected to the vehicle by means of the wheel suspension (40),
- an electric motor (20),
wherein the vehicle further comprises:
- a bevel gear (30), directly connected to the wheel (1) and having a constant gear reduction,
- a shaft (42; 42.1) arranged between the electric motor (20) and the bevel gear (30) such that the electric motor (20) is connected to the wheel (1) technically concerning the drive mechanism by means of the shaft (42; 42.1) and the bevel gear (30),
**characterized in that**
- the fixing of the electric motor (20) to the vehicle is designed such that the electric motor (20) is substantially uncoupled technically concerning the movement from the wheel movements (B2) of the wheel and
- the shaft, which connects the electric motor (20) to the wheel (1) technically concerning the drive mechanism, extens from a neutral center of rotation (X-X) of the vehicle-sided end of the wheel suspension (40) to a center of rotation of the wheel-sided end of the wheel suspension (40).

2. Vehicle according to claim 1, **characterized in that** by the fixing of the electric motor (20), the electric motor (20) is a constituent of the sprung mass of the vehicle.

3. Vehicle according to claim 1 or 2, **characterized in that**
- the electric motor (20) is arranged either entirely outside of the perimeter of the wheel (1) or
- the electric motor (20) is arranged laterally beside a tire (1.1) of the wheel (1),
wherein in both cases, the electric motor (20) is arranged outside of a wheel rim (3) of the wheel (1).

4. Vehicle according to claim 2, **characterized in that** the electric motor (20) is arranged outside of the perimeter of the wheel (1) and the shaft (42; 42.1) has a shaft length (L) corresponding approximately to the radius (R) of the wheel (1).

5. Vehicle according to claim 2, **characterized in that** the electric motor (20) is arranged outside of the center of the wheel (1) laterally beside a tire (1.1) of the wheel (1) and the shaft (42; 42.1) has a shaft length (L) that is shorter than the radius (R) of the wheel (1).

6. Vehicle according to any one of the claims 1 to 5, **characterized in that** the electric motor (20) is fixed so tightly to the vehicle that the electric motor (20) can perform a longitudinal movement (B1) with respect to the wheel (1) when the vehicle is moving, wherein this longitudinal movement (B1) is preferably a movement directed vertically or slightly oblique relative to a road cover (50).

7. Vehicle according to any one of the claims 1 or 6, **characterized in that** the shaft (42)
- is a shaft (42.1) of the ball-wedge type having a variable shaft length (L), or
- is a shaft (42.1) of the corrugated bellows type having a variable shaft length (L), or
- is a drive linkage (42.1) having a variable shaft length (L), or
- is a coupling shaft (42.1) having a variable shaft length (L),
so as to be capable to maintain a coupling connection between the bevel gear (30) and the electric motor (20) despite a longitudinal movement (B1) with respect to the wheel (1), wherein this longitudinal movement (B1) is preferably a movement directed vertically or slightly oblique relative to a road cover (50).

8. Vehicle according to any one of the claims 1 or 6, **characterized in that** the fixing of the electric motor (20) is designed such that it is capable to perform an angle movement with respect to the wheel (1).

9. Device (10) for use in a vehicle comprising a wheel (1) to be driven, which is connected with the vehicle by means of a wheel suspension (40), **characterized in that** the device comprises:
- an electric motor (20) for a suspension at the vehicle that is substantially uncoupled technically concerning the movement,
- a bevel gear (30), directly connected to the wheel (1) and having a constant gear reduction,
- a shaft (42; 42.1) for connecting the electric motor (20) to the bevel gear (30) technically concerning the drive mechanism,
wherein electric motor (20), the bevel gear (30) and the shaft (42; 42.1) are designed such that in a mounted state
- the electric motor (20) is a constituent of the sprung mass of the vehicle,
- the electric motor (20) is connected to the bevel gear (30) by means of the shaft (42; 42.1) such that the electric motor (20) is arranged either outside of the perimeter of the wheel (1) or laterally beside a tire (1.1) of the wheel outside of the center of the wheel, and
- the shaft (42; 42.1) that connects the electric motor (20) to the wheel (1) technically concerning the drive mechanism, extends from a neutral center of rotation (X-X) of the vehicle-sided end of the wheel suspension (40) to a center of rotation of the wheel-sided end of the wheel suspension (40)

10. Device (10) according to claim 9, **characterized in that** the electric motor (20) is mountable in the region of the vehicle-sided end (61) of a wheel suspension directly connected to the vehicle.

11. Device (10) according to claim 10, **characterized in that** the electric motor (20) is fixed so tightly to the vehicle that the electric motor (20), in a mounted state, can perform a longitudinal movement (B1) with respect to the wheel (1) when the vehicle is moving.

12. Device (10) according to claim 10 or 11, **characterized in that** the shaft (42)
- is a shaft (42.1) of the ball-wedge type having a variable shaft length (L), or
- is a shaft (42.1) of the corrugated bellows type having a variable shaft length (L), or
- is a drive linkage (42.1) having a variable shaft length (L), or
- is a coupling shaft (42.1) having a variable shaft length (L),
so as to be capable to maintain a coupling connection between the bevel gear (30) and the electric motor (20) despite a longitudinal movement (B1) with respect to the wheel (1), wherein this longitudinal movements (B1) is preferably a movement directed vertically or slightly oblique relative to a road cover (50).

13. Device (10) according to any one of the claims 9 to 12, **characterized in that** the electric motor (20) is designed such that, by the fixing to the vehicle-sided end of the wheel suspension (40), it is capable to perform an angle movement with respect to the wheel (1).

14. Device (10) according to any one of the claims 9 to 12, **characterized in that** the device (10) is designed such that the connection between the bevel gear (30) and the electric motor (20) is maintained despite angle movements, the shaft (42; 42.1) connecting the electric motor (20) to the wheel (1) can be arranged in a same neutral plane (E) as the center of rotation (X-X) of the vehicle-sided end of the wheel suspension (40) and an axis (A1) of the wheel-sided end of the wheel suspension (40).

15. Device (10) according to any one of the claims 9 to 14, **characterized in that** the bevel gear (30) is encased and/or supported in a drive casing (32).

## Revendications

1. Véhicule comprenant
- une suspension (40) de roue,
- une roue (1) à entraîner, laquelle est connectée au véhicule moyennant la suspension (40),
- un moteur électrique (20),
cependant le véhicule comprend en outre:
- un engrenage (30) à roués coniques, lequel est connecté directement à la roue (1) et comprend une réduction d'engrenage constante,
- un arbre (42; 42.1), lequel est arrangé entre le moteur électrique (20) et l'engrenage (30) à roués coniques de façon que le moteur électrique (20) est connecté à la roue (1) techniquement concernant l'entraînement moyennant l'arbre (42, 42.1) et l'engrenage (30) à roués coniques,
**caractérisé en ce que**
- la fixation du moteur électrique (20) est façonnée tellement que le moteur électrique (20) est essentiellement découplé des mouvements (B2) de roue de la roue (1) techniquement concernant le mouvement et
- l'arbre, qui connecte le moteur électrique (20) à la roue techniquement concernant l'entraînement, se déroule d'un centre de rotation (X-X) neutre du boue de côté véhicule de la suspension (40) à un centre de rotation du boue de côté roue de la suspension (40).

2. Véhicule selon la revendication 1, **caractérisé en ce que** par la fixation du moteur électrique (20), le moteur électrique (20) est un composant de la masse suspendue du véhicule.

3. Véhicule selon la revendication 1 ou 2, **caractérisé en ce que**
- le moteur électrique (20) est arrangé ou complètement hors le périmètre de la roue (1) ou
- le moteur électrique (20) est arrangé latéralement à côté d'un pneu (1.1) de la roue (1),
cependant dans les deux cas, le moteur électrique (20) est arrangé hors d'une jante (3) de la roue (1).

4. Véhicule selon la revendication 2, **caractérisé en ce que** le moteur électrique (20) est arrangé hors le périmètre de la roue (1) et l'arbre (42, 42.1) a un longueur (L) d'arbre correspondant approximativement au radius (R) de la roue (1).

5. Véhicule selon la revendication 2, **caractérisé en ce que** le moteur électrique (20) est arrangé hors le centre de la roue latéralement à côté d'un pneu (1.1) de la roue (1) et l'arbre (42, 42.1) a un longueur (L) d'arbre plus court que le radius (R) de la roue (1).

6. Véhicule selon quelques une des revendications 1 à 5, **caractérisé en ce que** le moteur électrique (20) est connecté tellement fixe, que le moteur électrique (20) peut accomplir un mouvement (B1) longitudinal en rapport avec la roue (1) quand le véhicule se bouge, cependant ce mouvement (B1) longitudinal est de préférence un mouvement calé verticalement ou légèrement oblique sur un revêtement (50) à rouler.

7. Véhicule selon une des revendications 1 ou 6, **caractérisé en ce que** l'arbre (42)
- est une arbre de façon bille-coin (42.1) ayant un longueur d'arbre (L) variable, ou
- est une arbre de façon soufflet (42.1) ayant un longueur d'arbre (L) variable, ou
- est une cinématique d'entraînement (42.1) ayant un longueur d'arbre (L) variable, ou
- est une arbre d'accouplement (42.1) ayant un longueur d'arbre (L) variable,
afin de pouvoir maintenir une connexion d'entraînement entre l'engrenage (30) à roués coniques et le moteur électrique (20) malgré un mouvement longitudinal (B1) en rapport avec la roue (1), cependant ce mouvement longitudinal (B1) est de préférence un mouvement calé verticalement ou légèrement oblique sur un revêtement (50) à rouler.

8. Véhicule selon une des revendications 1 ou 6, **caractérisé en ce que** la connexion du moteur électrique (20) est façonnée tellement qu'il est apte à effectuer un mouvement angulaire en rapport avec la roue (1).

9. Dispositif (10) pour un usage dans un véhicule comprenant une roue (1) à entraîner, laquelle est connectée au véhicule moyennant une suspension (40) de roue, **caractérisé en ce que** le dispositif comprend :
- un moteur électrique (20) pour un entreposage au véhicule essentiellement découplé techniquement concernant le mouvement,
- un engrenage (30) à roués coniques, connecté directement à la roue (1) et comprenant une réduction d'engrenage constante,
- un arbre (42; 42.1) pour une connexion de façon techniquement concernant l'entraînement du moteur électrique (20) à l'engrenage (30) à roués coniques,
cependant le moteur électrique (20), l'engrenage (30) à roués coniques et l'arbre (42, 42.1) sont façonnés tellement que dans un état monté,
- le moteur électrique (20) est un composant de la masse suspendue du véhicule,
- le moteur électrique (20) est connecté moyennant l'arbre (42, 42.1) à l'engrenage (30) à roués coniques tellement que le moteur électrique (20) se trouve ou hors le périmètre de la roue (1) ou latéralement à côté un pneu (1.1) de la roue (1) hors le centre de la roue, et
- l'arbre (42, 42.1) qui connecte le moteur électrique (20) à la roue (1) de façon techniquement concernant l'entraînement, se déroule d'un centre de rotation (X-X) neutre du boue de côté véhicule de la suspension (40) à un centre de rotation du boue de côté roue de la suspension (40).

10. Dispositif (10) selon la revendication 9, **caractérisé en ce que** le moteur électrique (20) peut être monté mécaniquement dans la zone d'un boue de côté véhicule d'une suspension (40), laquelle est connectée directement au véhicule.

11. Dispositif (10) selon la revendication 10, **caractérisé en ce que** le moteur électrique (20) peut être connecté au véhicule tellement fixe, que le moteur électrique (20), dans l'état monté, peut accomplir un mouvement (B1) longitudinal en rapport avec la roue (1) quand le véhicule se bouge

12. Dispositif (10) selon la revendication 10 ou 11, **caractérisé en ce que** l'arbre (42)
- est une arbre de façon bille-coin (42.1) ayant un longueur d'arbre (L) variable, ou
- est une arbre de façon soufflet (42.1) ayant un longueur d'arbre (L) variable, ou
- est une cinématique d'entraînement (42.1) ayant un longueur d'arbre (L) variable, ou
- est une arbre d'accouplement (42.1) ayant un longueur d'arbre (L) variable,
afin de pouvoir maintenir une connexion d'entraînement entre l'engrenage (30) à roués coniques et le moteur électrique (20) malgré un mouvement longitudinal (B1) en rapport avec la roue (1), cependant ce mouvement longitudinal (B1) est de préférence un mouvement calé verticalement ou légèrement oblique sur un revêtement (50) à rouler.

13. Dispositif (10) selon quelques une des revendications 9 à 12, **caractérisé en ce que** le moteur électrique (20) est façonné tellement que par la connexion, il est apte à effectuer un mouvement angulaire en rapport avec la roue (1).

14. Dispositif (10) selon quelques une des revendications 9 à 12, **caractérisé en ce que** le dispositif (10) est façonné tellement que la connexion entre l'engrenage (30) à roués coniques et le moteur électrique (20) reste maintenue malgré des mouvements angulaire, l'arbre (42; 42.1) connectant le moteur électrique (20) à la roue (1) peut être arrangé dans une même plaine neutre comme un centre de rotation (X-X) neutre du boue de côté véhicule de la suspension (40) et un axe (A1) du boue de côté roue de la suspension (40).

15. Dispositif (10) selon quelques une des revendications 9 à 14, **caractérisé en ce que** l'engrenage (30) à roués coniques est enfermé et/ou entreposé dans une boîte (32) d'entraînement.
